# EUROPEAN PATENT SPECIFICATION

(11) **EP 2 669 069 B1**
(45) Date of publication and mention of the grant of the patent: **19.09.2018**
(21) Application number: 12004162.9
(22) Date of filing: 31.05.2012
(51) Int. Cl.: B29C 49/42, B29C 49/18, B29C 49/58

(54) **Blowing fluid valve, blow molding unit and blow molding method**
Blasflüssigkeitsventil, Blasformeinheit und Blasformverfahren
Vanne de fluides à soufflage, unité de moulage par soufflage et procédé de moulage par soufflage

(43) Date of publication of application: 04.12.2013
(73) Proprietor: Aventics GmbH, 30880 Laatzen (DE)
(72) Inventor: Pimouguet, Oliver, 74130 Vougy (FR)
(74) Representative: Spahn, Tobias

(56) References cited:
- EP-A1- 0 511 564
- DE-A1- 10 256 534
- FR-A1- 2 928 197
- JP-A- H 102
- JP-A- S60 168 974
- JP-A- 2000 000 880
- US-A- 5 975 870
- US-A1- 2003 136 929
- US-A1- 2009 102 082
- US-B2- 6 932 102

## Description

The current invention relates to a blowing fluid valve adapted to provide a controlled blowing fluid flow in a blow molding device, especially during a pre-blowing phase, as well as to a corresponding blow molding unit and to a corresponding blow molding method.

### Prior Art

The invention will be described with a focus on injection blow molding (IBM) for the production of containers, especially bottles, from plastic performs. It can, however, also be advantageous in other manufacturing processes based on variable blowing fluid pressures, including, but not limited to, extrusion blow molding (EBM) and stretch blow molding (SBM).

The manufacture of containers, such as plastic (PET) bottles, from pre-forms by blow molding is well known. PET pre-forms are typically manufactured by injection molding. They provide, due to their small size, advantages in transport and storage. Such pre-forms can be blown on site into various shapes according to individual needs.

Before being blown, the pre-form is heat treated, e.g. in a thermal conditioning oven. The pre-form is then received in a mold containing the impression of the container to be obtained. During blowing, a blowing fluid, generally air at high pressure (e.g. 40 bar), is injected via a nozzle into the pre-form to inflate and to press the same against the walls of the mold. After blowing and cooling below the PET glass transition temperature, the mold is expanded.

Typically, previously to this "final" blowing step, known blowing methods include a stretching or elongation step performed by using a stretching rod and/or a pre-blowing step at lower pressure. While stretching via a rod mainly serves to vertically elongate the pre-form, pre-blowing is used to adapt the pre-form to the walls of the mold. For complex structures, pre-blowing is often obligatory to achieve satisfactory results.

The operation of a blow molding device is relatively complex, in particular due to the large number of parameters influencing the quality of the containers obtained. To yield high quality products and to avoid losses in raw material, it is e.g. essential to provide a proper air flow during pre-blowing, a correct pressure during final blowing and a controlled reduction in pressure during the expansion step before the blown article is removed from the mold. Providing a controlled blowing fluid flow in a blow molding device is therefore desired.

US 2009/0102082 A1 discloses a solenoid valve device including a solenoid valve and a choke. The solenoid valve device also including a pressure sensor connected to a control device, which transmits opening and closing signals to the solenoid valve. The control device also transmits signals for automatically setting the choke.

US 6,932,102 B2 discloses a device for regulating the flow rate and/or the pressure of a fluid transferred from a high-pressure reservoir to a reservoir. A first valve provided with a control is mounted in a pipe connecting the two reservoirs. A Laval nozzle located downstream of the first valve is provided with an electrical pressure-drop sensor. A second valve provided with a control is connected between the downstream part of the Laval nozzle and an exhaust orifice. A micro-programmed system, designed to receive the values read by the pressure-drop sensor and to drive the two controls of the two valves makes it possible to regulate the flow rate and/or the pressure of the fluid transferred from the first reservoir to the second reservoir.

While this enables for a control of blowing fluid flows and/or pressures during the phases of blow molding mentioned above, the device, however, is rather complex. Therefore, in conventional blow molding processes, often simple on/off valves are used in the pre-blowing step.

Consequently, a need for reliable, simple and cost-effective ways to regulate blowing fluid flows and/or pressures during a blow molding process, especially during pre-blowing, remains.

### Disclosure of the Invention

According to the invention, a blowing fluid valve adapted to provide a controlled blowing fluid flow in a blow molding device, especially during a pre-blowing phase, as well as a corresponding blow molding unit and a corresponding blow molding method according to the respective independent claims are provided. Advantageous embodiments are subject of the independent claims and of the description that follows.

### Advantages of the Invention

Flow regulation in a blowing fluid valve per se is known. However, as mentioned before, such a regulation was previously only possible with rather complex structures requiring a correspondingly complex regulation strategy. Especially when compared to the prior art as represented by e.g. US 6,932,102 B2, the current invention provides a number of significant improvements.

Compared to the prior art, a blowing fluid regulation, especially during a pre-blowing phase in a blow molding process, is now possible with a simple, reliable structure that can be implemented in a number of blowing fluid units in parallel, enabling for a simultaneous blowing of a large number of containers, e.g. PET bottles. While the current invention is especially advantageous in the regulation of flow rates of blowing fluids during pre-blowing in a blow molding process, also other processes may profit from the advantages of the invention. Due to a better pressure control during the pre-blowing and blowing phases, PET material may be saved. This effect is achieved by the possibility of blowing thinner structures, and thus saving material in the end product on the one hand and by minimizing reject on the other hand.

According to the invention, the blowing fluid flow, e.g. of air, can be regulated during the pre-blowing process by controlling the position of displaceable elements of a corresponding valve, e.g. of a poppet and/or a monobloc spindle, on the basis of a position signal of a displacement sensor. Together with a known pressure of the blowing fluid, e.g. as detected with one or more pressure sensors arranged upstream and/or downstream of the inventive valve, information about the actual blowing fluid flow rate through the valve may be obtained on the basis of the position signal. On this basis, in turn, a control of an actuator inducing a displacement of the displaceable element in the valve becomes possible. Such an actuator is advantageously implemented as a proportional solenoid. An inventive valve can be advantageously used together with a stretching rod used in an elongation step before final blowing to optimize bi-axial stretching processes.

During the control phase of an inventive valve, the displaceable element is balanced between a pressure force exerted upon the displaceable element, or a structure thereof, and an elastic force, e.g. from a spring. Therefore, no holding structure, e.g. operating on the basis of friction, is necessary. This reduces wear and tear.

As a further advantage, the inventive structure enables for an improvement of the design of a blowing fluid valve in order to enhance the mechanical resistance and the dynamic behavior.

According to the invention, a blowing fluid flow with highly dynamic characteristics can be obtained. Even if high working pressures, e.g. 30 to 40 bar, are used, only low pilot forces for opening the valve are necessary. During the actual opening phase, the displaceable element is held in position by a pressure force generated by the operating fluid. Therefore, for operating a blow molding unit including the inventive valve, a single pressure source is sufficient.

The inventive blow molding unit, including a valve as explained before, profits from the advantages as mentioned. Correspondingly, also a blow molding method which likewise forms part of the invention shows significant advantages over the prior art.

The invention and preferred embodiments of the invention are explained with reference to the appended figures. A person skilled in the art will use the features as explained above and as shown in the appended figures alone or in combination to realize the advantageous features.

### Short description of the drawings

- Fig. 1: shows a schematic illustration of a valve according to a preferred embodiment of the invention in three states of operation.
- Fig. 2: shows a schematic illustration of a valve according to a preferred embodiment of the invention in two states of operation.
- Fig. 3: shows a schematic illustration of a valve according to a preferred embodiment of the invention in a practical realization.

### Detailed explanation of the figures

Alike elements in the figures are denoted with identical reference numerals. A repeated explanation of these elements is omitted for conciseness.

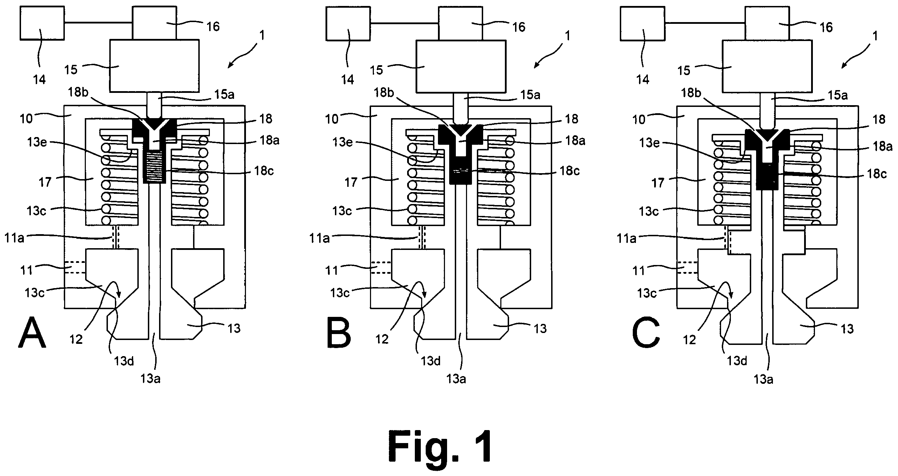

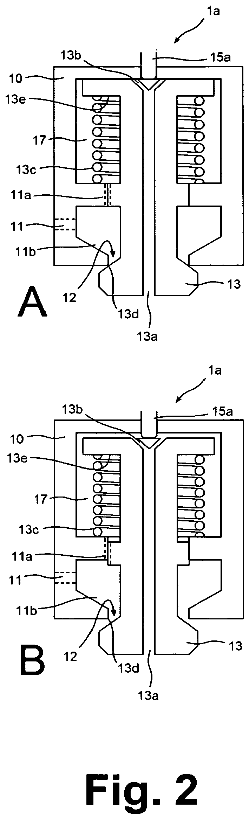

It is to be noted that, in the figures, dimensions are shown in a generalized form and are not necessarily drawn to scale. Therefore, diameters and/or dimensions of the blowing fluid valves and elements thereof shown in the figures, especially of the blowing fluid valves shown in Figure 1 and 2, may differ from those shown. For example, the diameters of face or region 13d, 13e and/or of the blowing fluid channel 11a and/or of structures surrounding and/or forming these elements may be equal to each other and or dimensioned differently in order to provide a advantageously balanced system as described below.

In Figure 1, a blowing fluid valve according to a preferred embodiment of the invention is shown in three states of operation A, B and C. The blowing fluid valve is denoted with reference numeral 1 and shown in a longitudinal section.

The blowing fluid valve 1 comprises a valve housing 10 with at least one blowing fluid inlet opening 11. The at least one inlet opening 11 is adapted to be supplied with a blowing fluid at an inlet pressure, e.g. with air at 30 bar to 40 bar. At least one blowing fluid outlet opening 12 is also provided in the valve housing 10.

The blowing fluid valve 1 further comprises a displaceable element 13 arranged within the valve housing 10. Between the valve housing 10 and the displaceable element 13, a blowing fluid channel 11a is provided. The blowing fluid channel 11a is adapted to provide a restricted blowing fluid flow between a blowing fluid space 11b and a pressure chamber 17 arranged within the valve housing 10. A poppet 18 comprising a central channel 18a and sub-channels 18b is movably arranged in the valve housing 10 and is guided by the displaceable element 13. The poppet 18 is biased upwards by a spring 18c and may be forced downwards by an actuating rod 15a of an actuator 15, e.g. a proportional solenoid and/or air operated solenoid valves.

The operation of the valve 1 may be explained as follows:
In a closed state of the valve 1, as shown in A, the poppet 18 is in held in an upward position by the spring 18. A blowing fluid introduced through the blowing fluid inlet opening 11 into the blowing fluid space 11b exerts a pressure force on a face or region 13d of the displaceable element 13. Note that an effective diameter of the displaceable element 13 at region 13d may be smaller than that of the poppet 18. Furthermore, the blowing fluid builds up a pressure differential by streaming into the pressure chamber 17 and exerts a corresponding pressure force upon a face or region 13e of the displaceable element 13. These pressure forces, together with a spring force generated by a spring 13c, are adapted to hold the displaceable element 13 in its upward position. In other words, if the two pressure forces and the spring force are present, the displaceable element 13 is held in its upward position. In this upward position, the displaceable element 13 or a sealing element connected therewith closes the blowing fluid outlet opening 12 of the valve housing 10. Likewise, as the poppet 18 is in the upward position, a blowing fluid flow through the sub-channels 18b and the central channel 18a of the poppet 18 and therefore through a central channel 13a in the displaceable element 13 is blocked.

To open the valve, as shown in B, the poppet 18 is pressed downward against the displaceable element 13 via the actuating rod 15a. Therefore, the blowing fluid in the pressure chamber 17 may flow through the sub-channels 18b and the central channel 18a of the poppet 18 and through the main channel 13a of the displaceable element 13. This causes a pressure drop in the pressure chamber 17. Therefore, no pressure force is exerted upon face or region 13e of the displaceable element 13 anymore. The pressure upon the face or region 13d of the displaceable element 13, however, is still present and balanced with a further pressure force exerted upon a protrusion of the displaceable element 13 near the restricted fluid channel 11a.

Therefore, as shown in C, the displaceable element 13 and the poppet 18 are moved downwards via the actuactor rod 15a against the force of the spring 13c. Therefore, the outlet opening 12 of the valve housing is opened. The blowing fluid may now stream through the inlet opening 11 and a chamber 11b directly to the outlet opening 12. Via a positioning of the displaceable element 13, a flow rate through the valve may now be regulated with a control device 14 using a signal from a displacement sensor 16 indicating a position of the displaceable element 13 and a pressure, e.g. from a pressure sensor upstream the valve 1 (not shown). A corresponding control includes changing a position of the displaceable element 13 because the flow rate through the valve changes with the position of the displaceable element 13. During this regulation, the displaceable element 13 is balanced, namely between the (balanced) pressure force on face or region 13d (downwards) and the pressure force exerted upon the protrusion of the displaceable element 13 near the restricted fluid channel 11a (upwards). In other words, only the force from the actuator rod 15a against the spring 13c is necessary to keep the outlet opening open. No friction seals or holding structures are required to that end. However, a blowing fluid flow rate may still be regulated by moving the actuator rod 15a which directly affects the position of the displaceable element 13 and the poppet 18 (the latter against the force of the spring 18c). A negligible flow of blowing fluid can be detected through the central channel 13a of the displaceable element 13.

For closing the valve, the force of the actuator rod 15b is reduced. The spring 13c therefore forces the displaceable element 13 into an upward position. Therefore, through a contact in region 13d, the blowing fluid outlet opening is closed. Afterwards, the spring 18c forces the poppet 18 into an upward position. Consequently, the sub-channels 18b and the central channel 18a of the poppet are closed, as e.g. shown in A. Therefore, a pressure in the pressure chamber 17 may reaccumulate which serves to keep the displaceable element 13 in an upward position.

In Figure 2, a simplified valve 1a is shown in two states of operation A (closed) and B (open). For opening and closing the outlet opening 12, again a displaceable element 13 is provided. However, the valve la is realized with a monobloc displaceable element 13 without a poppet.

The displaceable element 13 comprises, as above, a main channel 13a, and additionally sub-channels 13b. In a closed state A, the pressure in pressure chamber 17 may not dissipate through the sub-channels 13b and the main channel 13a. Therefore, a pressure force on face or region 13e, as above, is exerted which forces, together with the force of the spring 13c, the displaceable element 13 into an upward position.

A blowing fluid flow between the inlet opening 11, through the blowing fluid channel 11a and the central and sub-channels 13a, 13b only becomes possible in an opened state of the displaceable element 13, as shown in state of operation B. Even if the displaceable element 13 is realized as a monobloc structure, a valve 13 is still advantageous. Opening the valve is achieved with a small movement of an actuator rod 15a, opening a connection between the pressure chamber 17 and the central and sub-channels 13a, 13b. The pressure in the pressure chamber 17 dissipates and, consequently, the displaceable element 13 is moved further downwards, by the actuator rod 15a against the spring force of the spring 13c. Therefore, when opened, the displaceable element 13 is balanced and must not be held in its downward position by friction. Again, a flow rate may be adjusted and/or regulated as mentioned above, i.e. based on a detected position of the displaceable element 13 and a known pressure of the blowing fluid and effected by a movement of the displaceable element 13 via the actuator rod 15a.

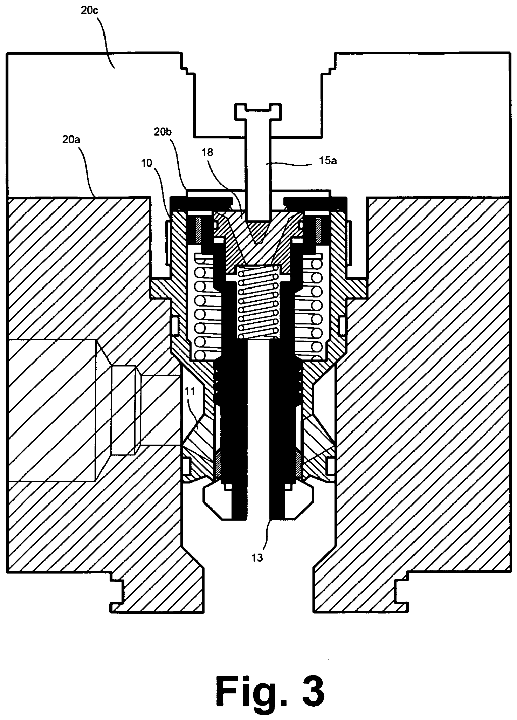

In Fig. 3, a valve according to a preferred embodiment of the invention is shown in a practical realization. This valve corresponds to the valve as shown in Figure 1, e.g. a valve with a displaceable element 13 and a poppet 18. The structures corresponding to those of Figure 1 become immediately evident to the skilled person and are only partially indicated with reference numerals. The valve housing 10 is mounted into a holding structure 20a to 20c, comprising i.a. a mounting block 20a, a retaining block 20b and a gasket 20c.

## Claims

1. A blowing fluid valve (1) adapted to provide a flow of a blowing fluid in a blow molding device with at least one controllable flow rate, especially during a pre-blowing phase of an injection blowing process, the blowing fluid valve (1) comprising
at least one inlet opening (11) adapted to be supplied with the blowing fluid at an inlet pressure, at least one outlet opening (12) adapted to dispense the blowing fluid, and at least one displaceable element (13), wherein different positions of the at least one displaceable element (13) correspond to different flow rates of the blowing fluid through the blowing fluid valve (1) for a given inlet pressure at the at least one inlet opening (11),
wherein the blowing fluid valve (1) comprises at least one displacement sensor (16) for determining a position of the at least one displaceable element (13) and control means (14) adapted to provide at least one control signal adapted to adjust the position of the at least one displaceable element (13) based on the determined position and a pressure of the blowing fluid, especially the inlet pressure.

2. A blowing fluid valve (1) according to claim 1, further comprising an actuator (15) adapted to adjust the position of the at least one displaceable element (13) based on the at least one control signal provided by the control means (14).

3. A blowing fluid valve (1) according to claim 2, wherein the actuator (15) comprises a proportional solenoid and/or at least one air operated solenoid valve.

4. A blowing fluid valve (1) according to any one of the preceding claims, further comprising at least one pressure sensor in fluid connection with the inlet opening (11) adapted to determine the inlet pressure and/or at least one pressure sensor in fluid connection with the outlet opening (12) adapted to determine an outlet pressure as the pressure of the blowing fluid.

5. A blowing fluid valve (1) according to any one of the preceding claims, further comprising a pressure chamber (17), wherein the displaceable element (13) is adapted to provide at least one flow path for the blowing fluid between the inlet (11) and the outlet opening (12) in at least one opening position and to block the at least one flow path in a blocking position, and further being adapted to be held in the blocking position when a pressure of the blowing fluid in the pressure chamber (17) exceeds a predetermined value and to be moved towards the at least one opening position when the pressure drops below the predetermined value.

6. A blowing fluid valve (1) according to claim 5, further comprising a poppet (18) adapted to be moved between a pressure buildup position in which the poppet (18) blocks an outlet of the pressure chamber (17), whereby a pressure of the blowing fluid in the pressure chamber (17) may build up and rise above the predetermined value, and a pressure release position in which the poppet (18) opens the outlet of the pressure chamber (17) whereby the pressure may drop below the predetermined value.

7. A blowing fluid valve (1) according to claim 6, the poppet (18) being further adapted to be moved on the basis of the at least one control signal provided by the control means (15) and thereby to adjust the position of the at least one displaceable element (13).

8. A blowing fluid valve (1) according to any one of claims 1 to 5, wherein the displaceable element (13) comprises at least one part (13e) which is adapted to be moved in connection with the displaceable element (13) between a pressure buildup position in which the at least one part (13e) blocks an outlet of the pressure chamber (17) whereby a pressure of the blowing fluid in the pressure chamber (17) may build up and rise above the predetermined value and a pressure release position in which the at least one part (13e) opens the outlet of the pressure chamber (17) whereby the pressure may drop below the predetermined value.

9. A blow molding unit comprising at least one blowing fluid valve (1) according to any one of the preceding claims.

10. A blow molding method, especially using a blow molding unit according to claim 9, comprising initiating blowing at least one blowing fluid valve (1) according to any one of claims 1 to 8 and controlling a flow of the blowing fluid through the least one blowing fluid valve (1) by determining a position of the at least one displaceable element (13) and adjusting the position of the at least one displaceable element (13) based on the determined position and the blowing fluid pressure by providing at least one control signal.

## Patentansprüche

1. Blasfluidventil (1), das geeignet ist, eine Strömung eines Blasfluids mit mindestens einer regelbaren Durchflussmenge in einer Blasformvorrichtung zu erzeugen, insbesondere während einer Vorblasphase eines Einspritzblasverfahrens, wobei das Blasfluidventil (1) folgendes umfasst:
mindestens eine Einlassöffnung (11), die dazu ausgelegt ist, mit dem Blasfluid bei einem Einlassdruck gespeist zu werden, mindestens eine Auslassöffnung (12), die dazu ausgelegt ist, das Blasfluid auszugeben, und mindestens ein verschiebbares Element (13), wobei unterschiedliche Positionen des mindestens einen verschiebbaren Elements (13) unterschiedlichen Durchflussmengen des Blasfluids durch das Blasfluidventil (1) bei einem gegebenen Einlassdruck an der mindestens einen Einlassöffnung (11) entsprechen,
wobei das Blasfluidventil (1) mindestens einen Abstandssensor (16) zur Bestimmung einer Position des mindestens einen verschiebbaren Elements (13) und Steuermittel (14) umfasst, die dazu ausgelegt sind, mindestens ein Steuersignal auszugeben, das dazu ausgelegt ist, die Position des mindestens einen verschiebbaren Elements (13) auf Basis der bestimmten Position und eines Drucks des Blasfluids, insbesondere des Einlassdrucks, einzustellen.

2. Blasfluidventil (1) nach Anspruch 1, das ferner ein Stellglied (15) umfasst, das dazu ausgelegt ist, die Position des mindestens einen verschiebbaren Elements (13) auf Basis des mindestens einen Steuersignals einzustellen, das vom Steuermittel (14) ausgegeben wird.

3. Blasfluidventil (1) nach Anspruch 2, wobei das Stellglied (15) einen Proportionalmagneten und/oder mindestens ein druckluftbetätigtes Magnetventil umfasst.

4. Blasfluidventil (1) nach einem der vorstehenden Ansprüche, das ferner mindestens einen Drucksensor in Fluidverbindung mit der Einlassöffnung (11) umfasst, der dazu ausgelegt ist, den Einlassdruck zu bestimmen, und/oder mindestens einen Drucksensor in Fluidverbindung mit der Auslassöffnung (12) umfasst, der dazu ausgelegt ist, einen Auslasssdruck als Druck des Blasfluids zu bestimmen.

5. Blasfluidventil (1) nach einem der vorstehenden Ansprüche, das ferner eine Druckkammer (17) umfasst, wobei das verschiebbare Element (13) dazu ausgelegt ist, mindestens einen Strömungsweg für das Blasfluid zwischen der Einlass- (11) und der Auslassöffnung (12) in mindestens einer Öffnungsstellung bereitzustellen und den mindestens einen Strömungsweg in einer Blockierstellung zu blockieren, und ferner dazu ausgelegt ist, in der Blockierstellung gehalten zu werden, wenn ein Druck des Blasfluids in der Druckkammer (17) einen vorgegebenen Wert überschreitet, und in Richtung der mindestens einen Öffnungsstellung bewegt zu werden, wenn der Druck unter den vorgegebenen Wert abfällt.

6. Blasfluidventil (1) nach Anspruch 5, das ferner einen Ventilkegel (18) umfasst, der dazu ausgelegt ist, zwischen einer Druckaufbaustellung, in der der Ventilkegel (18) einen Auslass der Druckkammer (17) blockiert, wobei ein Druck des Blasfluids in der Druckkammer (17) entstehen und über den vorgegebenen Wert steigen kann, und einer Druckentlastungsstellung bewegt zu werden, in der der Ventilkegel (18) den Auslass der Druckkammer (17) öffnet, wodurch der Druck unter den vorgegebenen Wert fallen kann.

7. Blasfluidventil (1) nach Anspruch 6, wobei der Ventilkegel (18) ferner dazu ausgelegt ist, auf Basis des mindestens einen, vom Steuermittel (15) ausgegebenen Steuersignals bewegt zu werden und dadurch die Position des mindestens einen verschiebbaren Elements (13) einzustellen.

8. Blasfluidventil (1) nach einem der Ansprüche 1 bis 5, wobei das verschiebbare Element (13) mindestens ein Teil (13e) aufweist, das dazu ausgelegt ist, in Verbindung mit dem verschiebbaren Element (13) zwischen einer Druckaufbaustellung, in der das mindestens eine Teil (13e) einen Auslass der Druckkammer (17) blockiert, wodurch sich ein Druck des Blasfluids in der Druckkammer (17) aufbauen und über den vorgegebenen Wert steigen kann, und einer Druckentlastungsstellung, in der das mindestens ein Teil (13e) den Auslass der Druckkammer (17) öffnet, wodurch der Druck unter den vorgegebenen Wert fallen kann, bewegt zu werden.

9. Blasformeinheit, die mindestens ein Blasfluidventil (1) nach einem der vorhergehenden Ansprüche umfasst.

10. Blasformverfahren, insbesondere unter Verwendung einer Blasformeinheit nach Anspruch 9, das das Auslösen des Blasens mindestens eines Blasfluidventils (1) nach einem der Ansprüche 1 bis 8 und das Regeln eines Durchflusses des Blasfluids durch das mindestens eine Blasfluidventil (1) durch Bestimmen einer Position des mindestens einen verschiebbaren Elements (13) und Einstellen der Position des mindestens einen verschiebbaren Elements (13) auf Basis der ermittelten Position und des Blasfluiddrucks durch Ausgeben mindestens eines Steuersignals umfasst.

## Revendications

1. Vanne de fluide de soufflage (1) adaptée pour fournir un écoulement d'un fluide de soufflage dans un dispositif de moulage par soufflage avec au moins un débit d'écoulement pouvant être commandé, en particulier pendant une phase de pré-soufflage d'un processus de soufflage par injection, la vanne de fluide soufflage (1) comprenant
au moins une ouverture d'entrée (11) adaptée pour recevoir le fluide de soufflage au niveau d'une pression d'entrée, d'au moins une ouverture de sortie (12) adaptée pour distribuer le fluide de soufflage, et au moins un élément déplaçable (13), les positions de l'au moins un élément déplaçable (13) correspondant à des débits différents du fluide de soufflage à travers la vanne de fluide de soufflage (1) pour une pression d'entrée donnée au niveau de l'au moins une ouverture d'entrée (11),
dans lequel la vanne de fluide de soufflage (1) comprend au moins un capteur de déplacement (16) pour déterminer une position de l'au moins un élément déplaçable (13) et des moyens de commande (14) adaptés pour fournir au moins un signal de commande adapté pour ajuster la position de l'au moins un élément déplaçable (13) sur la base de la position déterminée et d'une pression du fluide de soufflage, en particulier de la pression d'entrée.

2. Vanne de fluide de soufflage (1) selon la revendication 1, comprenant en outre un actionneur (15) adapté pour ajuster la position de l'au moins un élément déplaçable (13) sur la base de l'au moins un signal de commande fourni par les moyens de commande (14).

3. Vanne de fluide de soufflage (1) selon la revendication 2, dans laquelle l'actionneur (15) comprend un solénoïde proportionnel et/ou au moins une vanne à solénoïde à air comprimé.

4. Vanne de fluide de soufflage (1) selon l'une quelconque des revendications précédentes, comprenant en outre au moins un capteur de pression en raccordement fluidique avec l'ouverture d'entrée (11) adaptée pour déterminer la pression d'entrée et/ou au moins un capteur de pression en raccordement fluidique avec l'ouverture de sortie (12) adaptée pour déterminer une pression de sortie en tant que pression du fluide de soufflage.

5. Vanne de fluide de soufflage (1) selon l'une quelconque des revendications précédentes, comprenant en outre une chambre de pression (17), dans laquelle l'élément déplaçable (13) est adapté pour fournir au moins une voie d'écoulement pour le fluide de soufflage entre l'ouverture d'entrée (11) et de sortie (12) dans au moins une position d'ouverture et pour bloquer l'au moins une voie d'écoulement dans une position de blocage, et étant en outre adaptée pour être maintenue dans la position de blocage lorsqu'une pression du fluide de soufflage dans la chambre de pression (17) dépasse une valeur prédéterminée et pour être déplacée vers l'au moins une position d'ouverture lorsque la pression chute en-dessous de la valeur prédéterminée.

6. Vanne de fluide de soufflage (1) selon la revendication 5, comprenant en outre un clapet (18) adapté pour être déplacé entre une position d'accumulation de pression dans laquelle le clapet (18) bloque une sortie de la chambre de pression (17), une pression du fluide de soufflage dans la chambre de pression (17) pouvant s'accumuler et s'élever au-delà de la valeur prédéterminée, et une position de délestage de pression dans laquelle le clapet (18) ouvre la sortie de la chambre de pression (17), la pression pouvant descendre en-dessous de la valeur prédéterminée.

7. Vanne de fluide de soufflage (1) selon la revendication 6, le clapet (18) étant en outre adapté pour être déplacé sur la base de l'au moins un signal de commande fourni par les moyens de commande (15) et ainsi pour ajuster la position de l'au moins un élément déplaçable (13).

8. Vanne de fluide de soufflage (1) selon l'une quelconque des revendications 1 à 5, dans laquelle l'élément déplaçable (13) comprend au moins une partie (13e) qui est adaptée pour être déplacée en raccordement avec l'élément déplaçable (13) entre une position d'accumulation de pression dans laquelle l'au moins une partie (13e) bloque une sortie de la chambre de pression (17), une pression du fluide de soufflage dans la chambre de pression (17) pouvant s'accumuler et s'élever au-delà de la valeur prédéterminée et une position de délestage de pression dans laquelle l'au moins une partie (13e) ouvre la sortie de la chambre de pression (17), la pression pouvant descendre en-dessous de la valeur prédéterminée.

9. Unité de moulage par soufflage comprenant au moins une vanne de fluide de soufflage (1) selon l'une quelconque des revendications précédentes.

10. Procédé de moulage par soufflage, en particulier utilisant une unité de moulage par soufflage selon la revendication 9, comprenant le lancement du soufflage d'au moins une vanne de fluide de soufflage (1) selon l'une quelconque des revendications 1 à 8 et
la commande d'un écoulement du fluide de soufflage à travers l'au moins une vanne de fluide de soufflage (1) en déterminant une position de l'au moins un élément déplaçable (13) et en ajustant la position de l'au moins un élément déplaçable (13) sur la base de la position déterminée et de la pression du fluide de soufflage en fournissant au moins un signal de commande.
